Europäisches Patentamt

**European Patent Office**

Office européen des brevets

(11) Veröffentlichungsnummer: **0 234 506**
**B1**

(12) **EUROPÄISCHE PATENTSCHRIFT**

(45) Veröffentlichungstag der Patentschrift:
**12.09.90**

(51) Int. Cl.⁵: **B01D 25/172**

(21) Anmeldenummer: **87102373.5**

(22) Anmeldetag: **19.02.87**

(54) Filterpresse.

(30) Priorität: **27.02.86 DE 3606301**

(43) Veröffentlichungstag der Anmeldung:
**02.09.87 Patentblatt 87/36**

(45) Bekanntmachung des Hinweises auf die Patenterteilung:
**12.09.90 Patentblatt 90/37**

(84) Benannte Vertragsstaaten:
**AT BE CH DE ES FR GB IT LI NL SE**

(56) Entgegenhaltungen:
**DE-A- 2 920 385**
**FR-A- 2 349 352**
**GB-A- 415 186**
**GB-A- 424 502**

(73) Patentinhaber: **Rittershaus & Blecher GmbH,
Wittensteinstrasse 80-100, D-5600 Wuppertal 2(DE)**

(72) Erfinder: **Heinrich, Hans Jürgen, Wilhelmshöher
Strasse 129, D-5828 Ennepetal(DE)**
Erfinder: **Oelbermann, Max, Moltkestrasse 19,
D-5630 Remscheid(DE)**
Erfinder: **Hohmann, Ernst-Gerhard, Bireneichen 12,
D-5600 Wuppertal 2(DE)**

(74) Vertreter: **Peerbooms, Rudolf, Dipl.-Phys.,
Postfach 200 208 Dickmannstrasse 45c,
D-5600 Wuppertal 2(DE)**

## Beschreibung

Die Erfindung betrifft eine Filterpresse, deren Filterplatten und Endplatte an den unteren innenliegenden Flanschen von zwei parallelen, von Stützpfeilern getragenen I-förmigen Führungsträgern mittels zweier, an einem an der Oberseite der Filterplatten befestigten Jochstück angebrachter Laufrollen zentral aufgehängt sind und die mit einer Führungseinrichtung zum Verhindern eines Pendelns der Filterplatten um die Verbindungslinie ihrer beiden Laufrollen ausgerüstet ist, wobei die Führungseinrichtung aus mindestens einem begrenzt elastisch nachgiebigen, längs der Filterplatten verlaufenden, stangenförmigen Führungsstrang besteht und je Filterplatte mindestens ein den Führungsstrang einfassendes Führungselement aufweist und wobei der Abstand zwischen Führungsstrang und Vertikalmitte der Filterplatten größer als der Abstand der Laufrollen von der Vertikalmitte der Filterplatten ist.

Bei einer bekannten derartigen Filterpresse (FR-A 2 349 352) sind die Führungselemente und die Führungsstränge an den oberen Eckbereichen der Filterplatten angeordnet. Die Führungselemente und -stränge verhindern zwar wirksam ein Pendeln der Filterplatten um die von ihren Lauf- bzw. Aufhängerollen definierte Verbindungslinie, jedoch sind sie sehr störend für die heute zunehmend verlangte Ausrüstung solcher Filterpressen mit Zusatzeinrichtungen wie Wascheinrichtungen oder Filterkuchenabstreifvorrichtungen. Das gleiche gilt für die in der DE-A 2 920 385 gezeigten Führungsstränge in Form von Anschlagleisten, die unmittelbar über den beiden oberen Plattenecken angeordnet sind und an deren Unterseite die Filterplatten mit ihrer schmalen Oberseite anliegen.

Bei einer weiteren, durch die DE-C 1 109 647 bekannten Filterpresse besteht die Führungseinrichtung aus starren Stangen, z. B. Zugholmen, an denen die mit Gleitstücken oder Laufrollen versehenen Filterplatten unmittelbar anliegen. Dabei ist es bekannt, diese Führungsstangen entweder im Bereich der unteren Filterplattenecken oder in halber Plattenhöhe oder im Bereich der oberen Filterplattenecken anzuordnen. An diesen Stellen stehen die Führungsstangen jedoch oft den Bedienungsarbeiten hinderlich im Wege und sind die Führungen darüber hinaus den Angriffen des Filtermediums ausgesetzt, was insbesondere bei korrosiven Filtermedien nachteilig ist. Darüber hinaus erfordert die Anbringung der Gleitstücke oder Laufrollen an den Filterplatten gesonderte, verhältnismäßig aufwendige Bearbeitungen. Hinzu kommt, daß dem Filterplattenpaket oft kein ausreichender Spielraum für eine gewisse Insgesamtverformung gegeben ist. Insbesondere bei den heute zunehmend zum Einsatz kommenden, oft mehr als fünf Quadratmeter großen Filterplatten, die mit sehr hohen Drücken zusammengeschoben werden, treten — bedingt durch Unregelmäßigkeiten der filtertuchbespannten Filterplatten — Kräfte auf, die auf ein insgesamtes Hochsteigen des Filterplattenpaketes oder auf eine Insichverwindung des Filterplattenpaketes gerichtet sind. Bei starren Führungen kann es infolge dessen zu Zerstörungen der Führungen oder zu Plattenbrüchen kommen.

Durch die GB-A 415 186 ist ferner eine Filterpresse bekannt, bei der die Filterplatten über zwei in der Filterplattenebene liegende Laufrollen an den beiden unteren Schenkeln eines I-Führungsträgers aufgehängt sind. An dem Mittelschenkel des Führungsträgers sind dort beiderseits parallel zu diesem Mittelschenkel verlaufende Führungsschienen starr befestigt. Zwischen jeder Führungsschiene und dem Mittelschenkel ist dort jeweils eine horizontal liegende Führungsrolle eingefaßt, die über einen Arm mit dem die Laufrolle tragenden Jochstück verbunden sind, wobei eine Führungsrolle gegenüber der Filterplattenebene voreilend und die andere nacheilend angeordnet ist. Durch die dortige Führungseinrichtung wird einer Verkantung der Filterplatten, d.h. einer Schrägstellung um ihre Vertikalmittelachse wirksam vorgebeugt, jedoch verhindert die Führungseinrichtung nicht ein Pendeln der Filterplatten um die Verbindungslinie zwischen ihren beiden Laufrollen.

Der Erfindung liegt die Aufgabe zugrunde, eine Filterpresse mit einer eine bündige Ausrichtung benachbarter Filterplatten sicherstellenden Führung zu versehen, welche außerhalb des vom Filtermedium beeinflußten Bereiches liegt, raumsparend in die Filterpresse integriert ist und welche eine gewisse Verwindung oder sonstige Gesamtverstellung des Filterplattenpaketes zuläßt.

Ausgehend von einer Filterpresse der eingangs genannten Art, ist die Lösung dieser Aufgabe erfindungsgemäß dadurch erreicht,

– daß die Führungselemente an dem die Laufrollen tragenden Jochstück jeder Filterplatte befestigt sind,

– daß die Laufrollen gegenüber der Filterplattenebene jeweils in entgegengesetzte Richtungen versetzt sind,

– daß der Führungsstrang unmittelbar außen neben den Führungsträgern angeordnet ist, so daß die Eckbereiche der Filterplatten frei von Führungseinrichtungen sind,

– und daß entweder bei aus Stangen oder Rohren bestehendem Führungsstrang die Stangen oder Rohre an dem der Endplatte des Filterplattenpaketes gegenüberliegenden Stützpfeiler befestigt sind und ihr frei abragendes Ende ein Führungsloch der Endplatte durchsetzt,

– oder daß der Führungsstrang aus an den beiden Stützpfeilern befestigten und ein Führungsloch der Endplatte durchsetzenden, gespannten Seilen besteht.

Durch diese Maßnahmen werden eine Reihe von Vorteilen erreicht. Zum einen ist eine räumlich kompakte Anordnung von Filterplattenaufhängung und Führung erreicht, so daß die Führungen einer Bedienung der Filterpresse, beispielsweise bei einem Filtertuchwechsel, in keiner Weise mehr hinderlich im Wege stehen. Die Führungen liegen im deutlichen Abstand von den Filterplatten und damit außerhalb des Einwirkungsbereiches des Filtermediums, so daß sie vor Verschmutzung oder korrosiven Angriffen bewahrt bleiben. Durch die Integration der Führung in die Filterplattenaufhängung erübrigen sich besondere Bearbeitungen an den Filterplatten. Die Führungsstränge lassen darüber hinaus gewisse Insichverformungen des gesamten Filterplattenpaketes zu, stellen aber zuverlässig sicher, daß benachbarte Filterplatten beim Schließen der Filterpresse derart bündig aufeinander ausgerichtet bleiben, daß die Dichtränder der Filterplatten in einem zur Abdichtung der Filterkammern ausreichenden Maß jeweils aufeinander treffen.

In Ausgestaltung der Erfindung kann vorgesehen werden, daß der Führungsstrang unmittelbar seitlich neben einem der außenliegenden, unteren Flansche der Führungsträger angeordnet ist. Alternativ kann der Erfindung zufolge jedoch auch vorgesehen werden, daß der Führungsstrang oberhalb der von den Laufrollen definierten Horizontalebene angeordnet ist und daß das Jochstück mit einem, die unteren Flansche eines der Führungsträger umgreifenden, das Führungselement tragenden Arm versehen ist. Auf diese Weise wird ein vergrößerter Abstand zwischen Filterplattenaufhängung und Führung erreicht. Das Führungselement kann dabei in der Filterplattenebene angeordnet sein.

Ein noch größerer Abstand zwischen Filterplattenaufhängung und Führung kann in Weiterbildung der Erfindung dadurch erreicht werden, daß das Führungselement in einer gegenüber der Filterplattenebene versetzten Vertikalebene angeordnet ist.

Gemäß einer bevorzugten Ausführungsform der Erfindung können beidseits der Führungsträger jeweils ein Führungsstrang angeordnet sein und kann jedes Jochstück zwei als nach oben offene U-Teile ausgebildete Führungselemente aufweisen, die entgegengesetzt zur Versetzungsrichtung der Laufrollen gegenüber der Filterplattenebene versetzt sind wobei jeweils das neben einem der Führungsträger liegende Führungselement mit der auf dem anderen Führungsträgers geführten Laufrolle in derselben Vertikalebene liegt. Zur Erzielung möglichst großer Abstände gegenüber der mittigen Aufhängung können die Führungsstränge im oberen Bereich der Führungsträger angeordnet sein.

Wenn die Führungseinrichtung nur einen einzigen Führungsstrang aufweist, bestehen die Führungselemente vorteilhafterweise aus den Führungsstrang umschließenden Rohrschellen.

Der Gegenstand der Erfindung wird im folgenden anhand mehrerer in der Zeichnung dargestellter Ausführungsbeispiele näher beschreiben. In der Zeichnung zeigen:

Fig. 1 eine Filterplatte mit mittiger Aufhängung und einer in die Aufhängung integrierten Ausricht-Führung für die Filterplatten gemäß einer ersten Ausführungsform,

Fig. 2 eine zweite Ausführungsform,

Fig. 3 eine dritte Ausführungsform und

Fig. 4 einen Schnitt gemäß der Linie IV–IV in Fig. 3.

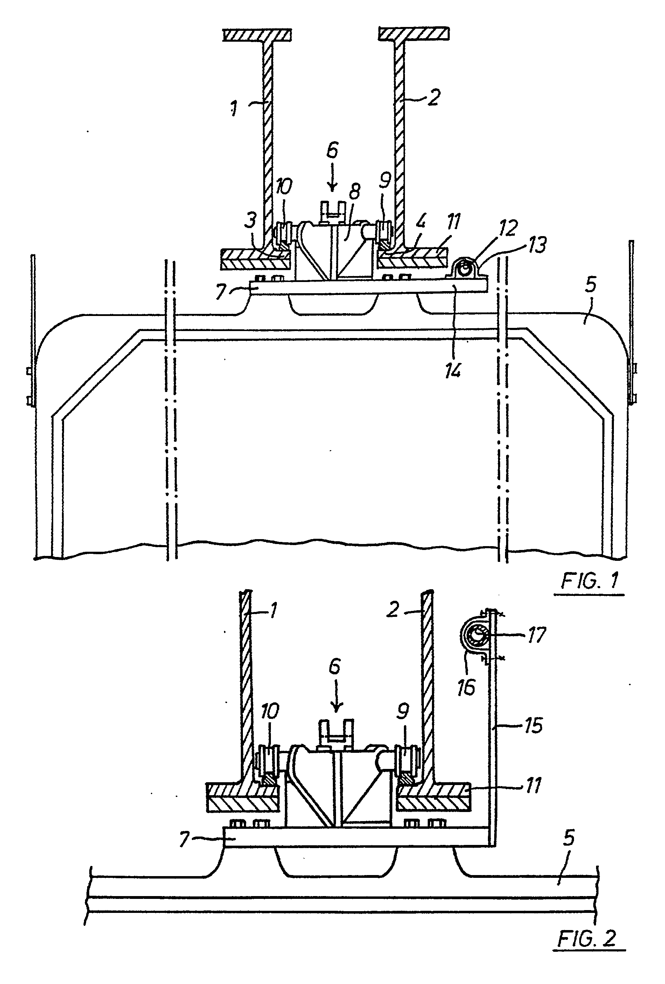

Fig. 1 zeigt zwei I-förmig ausgebildete Führungsträger 1, 2, die endseitig auf zwei nicht gezeigten Stützpfeilern abgestützt sind und auf deren unteren, jeweils innenliegenden Flanschen 3, 4 Filterplatten 5 zentral aufgehängt sind. An die Filterplatten 5 ist oben ein Jochstück 6 angeschraubt, das aus einem unteren, angeschraubten Balken 7 und einer demgegenüber schräg ausgerichteten, etwa dreieckigen Platte 8 besteht, an welcher die Laufrollen 9, 10, jeweils in entgegengesetzte Richtungen gegenüber der Ebene der Filterplatte 5 versetzt, angeordnet sind. Unmittelbar neben dem unteren Außenflansch 11 verläuft längs des Führungsträgers 2 ein rohrförmiger Führungsstrang 12, der von einem rohrschellenartigen Führungselement 13 umschlossen ist, welche an eine Verlängerung 14 des Balkens 7 des Jochstückes 6 befestigt, z. B. angeschraubt ist. Die Filterpresse ist in bekannter Weise an einer Seite mit einer ebenfalls auf den Führungsträgern 1, 2 verfahrbar gelagerten Endplatte (nicht gezeigt) versehen, an der die hydraulische Zylindereinrichtung zum Schließen des Filterplattenpaketes unmittelbar oder über Zugstangen angreift. Der Führungsstrang 12 ist mit einem Ende starr an dem der Endplatte abgewandten Stützpfeiler befestigt, während sein anderes, frei abragendes Ende ein Führungsloch dieser Endplatte durchsetzt.

Bei der Ausführungsform gemäß Fig. 2 ist an den Balken 7 des Jochstückes 6 ein aufwärts gerichteter Arm 15 befestigt, an dessen dem Führungsträger 2 zugewandten Seite oben ein rohrschellenartiges Führungselement 16 angeschraubt ist, welches den etwa in halber Höhe der Führungsträger 1, 2 angeordneten, rohrförmigen Führungsstrang 17 umschließt.

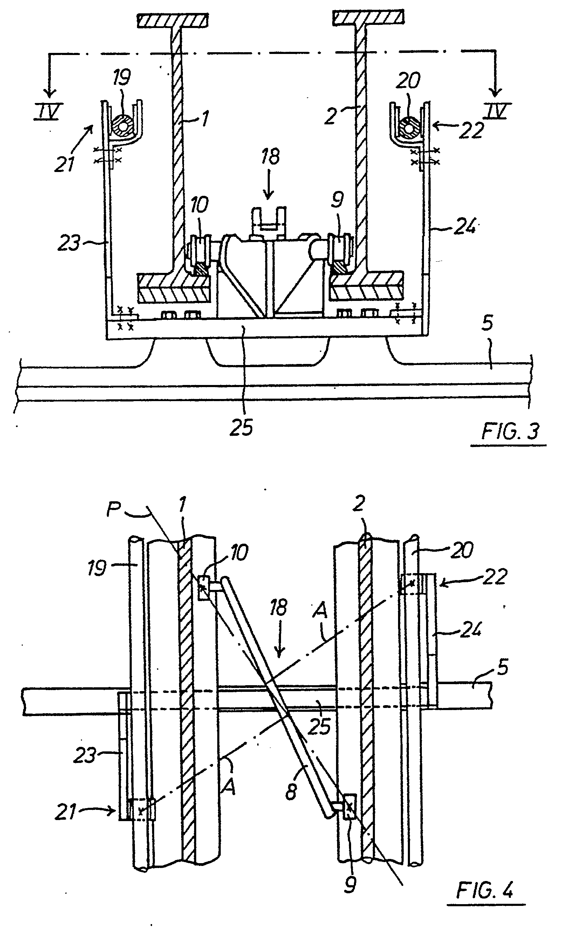

Bei dem Ausführungsbeispiel nach den Fig. 3 und 4 sind außen neben den Führungsträgern 1, 2 zwei Führungsstränge 19, 20 angeordnet, die jeweils von nach oben hin offenen, U-förmigen Führungselementen 21, 22 umgriffen werden. Die Führungselemente 21, 22 werden jeweils von Armen 23, 24 getragen, die an die äußeren Enden des Balkens 25 des Jochstückes 18 angeschraubt sind.

Während bei den Ausführungsbeispielen nach den Fig. 1 und 2 die Führungselemente 13, 16 innerhalb der von der Filterplatte 5 definierten Vertikalebene liegen, sind beim Ausführungsbeispiel nach den Fig. 3 und 4 die Arme 23, 24 entgegengesetzt zur Versetzung der Laufrollen 9, 10 abgewinkelt derart, daß das außen neben dem Führungsträger 2 angeordnete Führungselement 22 in der gleichen Vertikalebene wie die auf dem anderen Führungsträger 1 geführte Laufrolle 10 liegt und daß das Führungselement 21 in der gleichen Vertikalebene wie die Laufrolle liegt. Die Führungselemente 21, 22 weisen damit einen beträchtlichen Abstand A gegenüber der durch die beiden Laufrollen 9, 10 definierten Pendelachse P der Filterplatte auf, so daß über die Führungsstränge 19, 20 eine wirksame Relativausrichtung der jeweils benachbarten Filterplatten beim Schließen oder Öffnen der Filterpresse gewährleistet ist.

## Patentansprüche

1. Filterpresse, deren Filterplatten (5) und Endplatte an den unteren innenliegenden Flanschen (3, 4) von zwei parallelen, von Stützpfeilern getragenen I-förmigen Führungsträgern (1, 2) mittels zweier, an einem an der Oberseite der Filterplatten (5) befestigten Jochstück (6) angebrachter Laufrollen (9, 10) zentral aufgehängt sind und die mit einer Führungseinrichtung zum Verhindern eines Pendelns der Filterplatten (5) um die Verbindungslinie ihrer beiden Laufrollen (9, 10) ausgerüstet ist, wobei die Führungseinrichtung aus mindestens einem begrenzt elastisch nachgiebigen, längs der Filterplatten (5) verlaufenden, stangenförmigen Führungsstrang (12) besteht und je Filterplatte mindestens ein den Führungsstrang (12) einfassendes Führungselement (13) aufweist und wobei der Abstand zwischen Führungsstrang (12) und Vertikalmitte der Filterplatten (5) größer als der Abstand der Laufrollen (9, 10) von der Vertikalmitte der Filterplatten (5) ist, dadurch gekennzeichnet,

– daß die Führungselemente (13) an dem die Laufrollen (9, 10) tragenden Jochstück (6) jeder Filterplatte (5) befestigt sind,

– daß die Laufrollen (9, 10) gegenüber der Filterplattenebene jeweils in entgegengesetzte Richtungen versetzt sind,

– daß der Führungsstrang (12) unmittelbar außen neben den Führungsträgern (1, 2) angeordnet ist, so daß die Eckbereiche der Filterplatten frei von Führungseinrichtungen sind,

– und daß entweder bei aus Stangen oder Rohren bestehendem Führungsstrang (12) die Stangen oder Rohre an dem der Endplatte des Filterplattenpaketes gegenüberliegenden Stützpfeiler befestigt sind und ihr frei abragendes Ende ein Führungsloch der Endplatte durchsetzt,

– oder daß der Führungsstrang (12) aus an den beiden Stützpfeilern befestigten und ein Führungsloch der Endplatte durchsetzenden, gespannten Seilen besteht.

2. Filterpresse nach Anspruch 1, dadurch gekennzeichnet, daß der Führungsstrang (12) unmittelbar seitlich neben einem der außenliegenden, unteren Flansche (11) der Führungsträger (1, 2) angeordnet ist.

3. Filterpresse nach Anspruch 1, dadurch gekennzeichnet, daß der Führungsstrang (17) oberhalb der von den Laufrollen (9, 10) definierten Horizontalebene angeordnet ist und daß das Jochstück (6) mit einem, die unteren Flansche (11) eines der Führungsträger (1, 2) umgreifenden, das Führungselement (16) tragenden Arm (15) versehen ist.

4. Filterpresse nach den Ansprüchen 2 oder 3, dadurch gekennzeichnet, daß das Führungselement (21 bzw. 22) in einer gegenüber der Filterplattenebene versetzten Vertikalebene angeordnet ist.

5. Filterpresse nach Anspruch 4, dadurch gekennzeichnet, daß beidseits der Führungsträger (1, 2) je ein Führungsstrang (19, 20) angeordnet ist, daß jedes Jochstück (18) zwei, als nach oben offene U-Teile ausgebildete Führungselemente (21, 22) aufweist, die entgegengesetzt zur Versetzungsrichtung der Laufrollen (9, 10) gegenüber der Filterplattenebene versetzt sind, wobei jeweils das neben einem der Führungsträger (1, 2) liegende Führungselement (21 bzw. 22) mit der auf dem anderen Führungsträger (2 bzw. 1) geführten Laufrolle (9 bzw. 10) in derselben Vertikalquerebene der Filterpresse liegt.

6. Filterpresse nach einem der Ansprüche 3 bis 5, dadurch gekennzeichnet, daß die Führungsstränge (19, 20) im oberen Bereich der Führungsträger (1, 2) angeordnet sind.

7. Filterpresse nach einem der Ansprüche 1 bis 6, dadurch gekennzeichnet, daß die Führungselemente (12, 16) als Rohrschellen ausgebildet sind.

## Claims

1. Filter press whose filter plates (5) and end plate are suspended centrally via two rollers (9, 10) attached to a yoke (6) fastened to the upper side of the filter plates (5) on the lower, inner flanges (3, 4) of two parallel I-shaped guide-brackets (1, 2) supported by supporting pillars and which (filter press) is equipped with a guiding apparatus to prevent the filter plates (5) swinging around the connection line of their two rollers (9, 10), wherein the guiding apparatus consists of at least one rod-shaped guiding cord (12), pliable and of limited elasticity, running along the filter plates (6) and has for each filter plate at least one guiding element (13) surrounding the guiding cord (12) and wherein the distance between guiding cord (12) and vertical centre of the filter plates (5) is greater than the distance between the rollers (9, 10) and the vertical centre of the filter plates (5),
the filter press is characterised,
– in that the guiding elements (13) are attached to the yoke (6) of each filter plate (5) carrying the rollers (9, 10);
– in that the rollers (9, 10) are offset, in opposite directions, relative to the filter plate plane;
– in that the guiding cord (12) is located on the outside immediately adjacent to the guide-brackets (1, 2), so that the corner areas of the filter plates are free of guiding elements;
– and in that when the guiding cord (12) consists either of rods or pipes the rods or pipes are fixed to the supporting pillar opposite to the end plate of the filter plate assembly and their freely projecting end passes through a guide-hole in the end plate;
– or that the guiding cord (12) consists of tensioned ropes fastened to the two supporting pillars and passing through a guide-hole in the end plate.

2. Filter press as in Claim 1, characterised in that the guiding cord (12) is located laterally immediately adjacent to one of the outer, lower flanges (11) of the guide-brackets (1, 2).

3. Filter press as in Claim 1, characterised in that the guiding cord (17) is located above the horizontal plane defined by the rollers (9, 10) and that the yoke (6) is equipped with an arm (15) reaching around the lower flange (11) of one of the guide-brackets (1, 2) and carrying the guiding element (16).

4. Filter press according to Claims 2 or 3, characterised in that the guiding element (21 or 22) is located in a vertical plane offset with respect to the filter plate plane.

5. Filter press according to Claim 4, characterised in that on each side of the guide-brackets (1, 2), there is one guiding cord (19, 20), in that each yoke (18) has two guiding elements (21, 22), in the form of U-shaped parts with the open end upwards, which are offset with respect to the filter plate plane, conversely to the offset direction of the rollers (9, 10), and in that each guiding element (21 or 22) next to one of the guide-brackets (1, 2) lies in the same vertical plane of the filter press as the roller (9 or 10) on the other guide-bracket (2 or 1) respectively.

6. Filter press as in one of Claims 3 to 5, characterised in that the guiding cord (19, 20) are located in the upper area of the guide-brackets (1, 2).

7. Filter press as in one of Claims 1 to 6, characterised in that the guiding elements (12, 16) are shaped like pipe clamps.

**Revendications**

1. Filtre-presse, dont les plaques de filtre (5) et la plaque d'extrémité sont suspendues centralement aux brides intérieures (3, 4) inférieures de deux supports de guidage (1, 2) parallèles, en forme de l, portés par des piliers d'appui, au moyen de deux galets mobiles (9, 10) montés sur une traverse (6) fixée à la face supérieure des plaques de filtre (5), filtre-presse équipé d'un dispositif de guidage pour empêcher l'oscillation pendulaire des plaques de filtre (5) autour de la droite de liaison de ses deux galets mobiles (9, 10), le dispositif de guidage se composant d'au moins un cordon de guidage (12) en forme de tige, déformable élastiquement de façon limitée, s'étendant le long des plaques de filtre (5), et chaque plaque de filtre présentant au moins un élément de guidage (13) entourant le cordon de guidage (12), la distance entre cordon de guidage (12) et plan médian vertical des plaques de guidage (5) étant supérieure à la distance des galets mobiles (9, 10) au plan médian vertical des plaques de filtre (5), caractérisé par le fait que

 — les éléments de guidage (13) sont fixés à la traverse (6) portant les galets mobiles (9, 10) de chaque plaque de filtre (5),

 — les galets mobiles (9, 10) sont chacun décalés en sens opposé par rapport au plan des plaques de filtre,

 — le cordon de guidage (12) est disposé directement extérieurement, à côté des supports de guidage (1, 2), de façon que les zones de coin des plaques de filtre soient débarrassées des dispositifs de guidage, et que, soit, dans le cas de cordon de guidage (12) composé de tiges ou de tubes, les tiges ou tubes sont fixés sur le pilier d'appui opposé à la plaque d'extrémité du paquet de plaques de filtre et leur extrémité qui dépasse librement traverse un trou de guidage de la plaque d'extrémité,

 — soit que le cordon de guidage (12) se compose de câbles tendus, fixés aux deux piliers d'appui et traversant un trou de guidage de la plaque d'extrémité.

2. Filtre-presse selon la revendication 1, caractérisé par le fait que le cordon de guidage (12) est disposé directement latéralement, à côté d'un rebord extérieur (11) inférieur du support de guidage (1, 2).

3. Filtre-presse selon la revendication 1, caractérisé par le fait que le cordon de guidage (17) est disposé au-dessus du plan horizontal défini par les galets de guidage (9, 10), et que la traverse (6) est pourvue d'un bras (15), entourant le rebord inférieur (11) de l'un des supports de guidage (1, 2) et portant l'élément de guidage (16).

4. Filtre-presse selon la revendication 2 ou 3, caractérisé par le fait que l'élément de guidage (21, respectivement 22) est disposé dans un plan vertical décalé par rapport au plan des plaques de filtre.

5. Filtre-presse selon la revendication 4, caractérisé par le fait que des deux côtés des supports de guidage (1, 2) est disposé un cordon de guidage (19, 20), que chaque traverse (18) présente deux éléments de guidage (21, 22) réalisés sous forme de U ouverts vers le haut, qui sont décalés, en sens inverse du sens de décalage des galets mobiles (9, 10), par rapport au plan des plaques de filtre, l'élément de guidage (21 ou 22) se trouvant respectivement à côté de l'un des supports de guidage (1, 2), avec le galet mobile (9 ou 10) guidé sur l'autre support de guidage (2 ou 1), étant situé dans le même plan transversal vertical que celui du filtre-presse.

6. Filtre-presse selon l'une des revendications 3 à 5, caractérisé par le fait que les cordons de guidage (39, 20) sont disposés dans la zone supérieur des supports de guidage (1, 2).

7. Filtre-presse selon l'une des revendications 1 à 6, caractérisé par le fait que les éléments de guidage (12, 16) sont réalisés sous forme de coquilles tubulaires.

_FIG. 1_

_FIG. 2_

FIG. 3

FIG. 4